# EUROPÄISCHE PATENTSCHRIFT

(11) **EP 1 564 430 B1**
(45) Veröffentlichungstag und Bekanntmachung des Hinweises auf die Patenterteilung: **18.04.2007**
(21) Anmeldenummer: 05002605.3
(22) Anmeldetag: 08.02.2005
(51) Int. Cl.: F16D 59/02, F16D 65/14

(54) **Hebelsystem für eine Doppelbackenbremse**
Lever mechanism system for a twin shoe brake.
Méchanisme à levier pour frein à mâchoires.

(30) Priorität: 12.02.2004 DE 202004002192 U
(43) Veröffentlichungstag der Anmeldung: 17.08.2005
(73) Patentinhaber: Bubenzer Bremsen Gerhard Bubenzer Ing. GmbH, 57548 Kirchen-Wehbach (DE)
(72) Erfinder: Treude, Hans-Walter, 57234 Wilnsdorf (DE)
(74) Vertreter: von Samson-Himmelstjerna, Friedrich

(56) Entgegenhaltungen:
- DE-C1- 4 305 285
- GB-A- 878 315
- GB-A- 1 502 616

## Beschreibung

Die vorliegende Erfindung betrifft ein Hebelsystem für Doppelbackenbremsen, bei denen einen Bremskörper umgreifende Bremshebel über entsprechende Bremsbacken am Bremskörper angreifen und eine entsprechende Bremskraft ausüben. Die Bremshebel werden dabei über einen Hebel betätigt, auf den eine Stellkraft ausgeübt wird. Insbesondere betrifft die Erfindung Trommel- oder Scheibenbremsen, welche mit einem solchen Hebelsystem betätigt werden.

Solche Bremsvorrichtungen werden als sog. Industriebremsen verwendet, bei denen in der Regel eine Feder über ein Bremsgestänge und daran gekoppelte Bremsbacken eine Reibkraft zwischen einem Bremskörper, beispielsweise eine Scheibe bzw. eine Trommel, und den Bremsbacken mit daran angebrachten Bremsbelägen bewirkt, so daß an den Bremskörper gekoppelte Massen abgebremst oder festgehalten werden. Sog. Lüftgeräte, die elektrohydraulisch, magnetisch, pneumatisch, hydraulisch oder elektromechanisch wirken, öffnen dabei die Bremse gegen die Federkraft. Dabei wird ein Spalt zwischen dem Bremskörper und den Bremsbacken gebildet, und die drehfest an den Bremskörper gekoppelten Massen werden freigegeben.

Im Betrieb erwärmen sich die Bremskörper unter Umständen erheblich. Die damit einhergehende Wärmeausdehnung der Bremskörper verringert den sog. Lüftspalt zwischen Bremsbacken und Bremskörper. Dieser Effekt ist insbesondere bei Trommelbremsen sehr ausgeprägt, da der Durchmesser der Bremstrommel proportional zu einer temperaturbedingten Umfangszunahme wächst. Damit auch bei erhitzten Bremsen ein hinreichend großer Lüftspalt zur Verfügung steht, müssen entsprechend große Stellwege mit dem Bremshebelsystem überwunden werden. Diese Anforderung konkurriert mit dem Bestreben, die Bremsen insgesamt möglichst kompakt und leicht auszuführen, in anderen Worten die bewegten Massen gering zu halten und die erforderlichen Hebelabmessungen und -wege zu beschränken. Gleichzeitig soll die bei geschlossener Bremse zwischen Bremskörper und Bremsbacken wirkende Kraft möglichst hoch sein, um möglichst hohe Reibwirkungen zur Energieumwandlung zu erzielen.

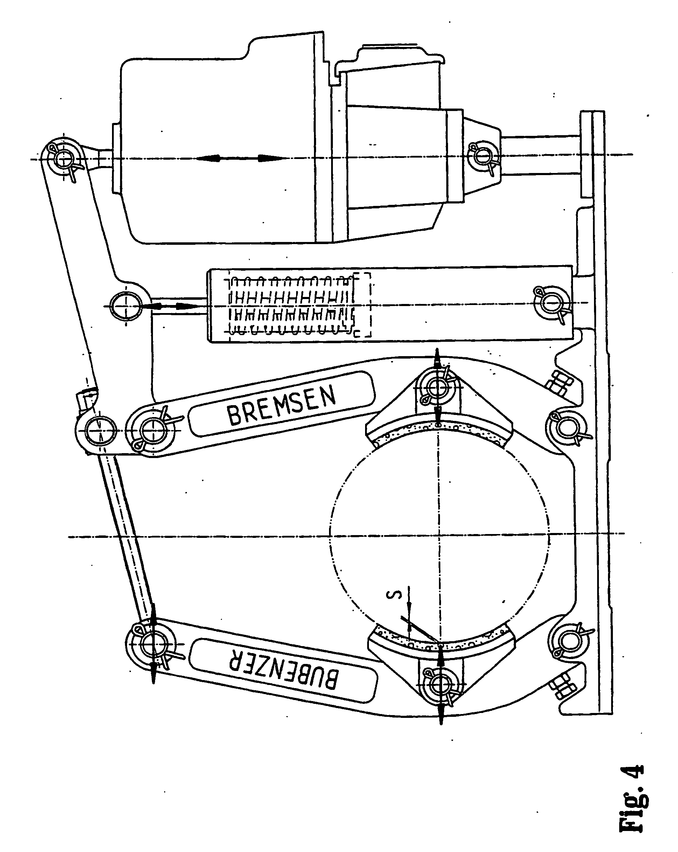

Bei herkömmlichen Bremsen, z.B. bei Trommelbremsen gemäß DIN 15435 (siehe Fig. 4) besteht das Bremsgestänge im wesentlichen aus zwei schwenkbar an einem Grundgestell angeordneten Bremshebeln, welche die Bremstrommel umgreifen und jeweils über eine Bremsbacke an dieser angreifen. Die Bremshebel sind an ihren freien Enden mit einem Bremsgestänge gekoppelt, das aus einem Winkelhebel und einem Zugelement besteht. Der Winkelhebel weist einen langen und einen kurzen Schenkel auf, wobei am kurzen Schenkel ein Anlenkpunkt direkt mit einem Bremshebel und ein weiterer Anlenkpunkt über das Zugelement mit dem anderen Bremshebel gekoppelt ist. Am vom kurzen Schenkel des Winkelhebels abgehenden langen Schenkel greifen die Stellelemente der Bremse, nämlich die Bremsfeder und/oder das sog. Lüftgerät an. Die Federkraft der Bremsfeder wird durch das Hebelsystem verstärkt und bewirkt die Bremskraft zwischen Trommel und Bremsbacken. Bei dieser Bauart verlaufen Stellweg und Bremskraft weitgehend proportional zum Federweg. Das heißt, für hohe Bremskräfte sind entweder große Federkräfte oder große Hebelübersetzungen notwendig. Um große Bremskräfte und einen großen Lüftspalt zu realisieren, müssen entweder entsprechend starke Federn und damit auch entsprechend starke Lüftgeräte verwendet werden, die einen vergleichsweise langen Stellweg überbrücken, oder das Hebelgestänge muß verlängert werden und die entsprechenden Feder- und Stellwege müssen noch weiter erhöht werden.

GB 1 502 616 offenbart eine Ausführung mit einem mehrteiligen, verstellbaren Winkelhebel, bei dem die Wirklänge des kurzen Schenkels verstellbar ist. Der Abstand zwischen dem Anlenkpunkt, der direkt mit einem Bremshebel gekoppelt ist, und dem, der über das Zugelement mit dem anderen Bremshebel gekoppelt ist, kann über eine Stellschraube variiert werden. Damit kann die Bremskraft in einem bestimmten Bereich eingestellt werden. Für den Winkelhebel sind mindestens drei Hebelelemente und geeignete Koppelelemente erforderlich.

Die Aufgabe der vorliegenden Erfindung besteht darin, ein möglichst verbessertes Hebelsystem anzugeben. Insbesondere kann eine weitere Aufgabe darin liegen, ein Hebelsystem darzustellen, bei dem gleichzeitig kurze Feder- und Stellwege und niedrige Feder- und Stellkräfte über ein möglichst einfaches, kompaktes Hebelsystem in eine hohe Bremskraft in der Bremsstellung bzw. in einen großen Lüftspalt beim Lösen der Bremse umgesetzt werden.

Erfindungsgemäß wird diese Aufgabe durch ein Hebelsystem nach Anspruch 1 gelöst, bei dem ein an einem Bremshebel angreifender Koppelhebel, an dem die Stellkraft F_{f} angreift, über eine Schubstange an den anderen Bremshebel gekoppelt ist. In Bremsstellung verstärkt die Schubstange die aufgebrachten Stellkräfte mit zunehmendem Verstellweg des Koppelhebels überproportional und ermöglicht so beim Bremsen eine hohe Bremskraft und beim Lösen der Bremse einen großen Lüftspalt zwischen Bremskörper und Bremsbacken ohne daß eine verstärkte Feder, ein erhöhter Stellweg, bzw. erhöhte Hebelabmessungen notwendig sind.

Die Weiterbildungen gemäß den Ansprüchen 2 bis 6 betreffen Ausgestaltungen des Hebelsystems, die Optimierungen hinsichtlich unterschiedlicher Anforderungen ermöglichen. Dabei betreffen die Ausführungen gemäß Anspruch 2 und 3 eine alternative Bauweise des Hebelsystems, die eine entsprechende Kraftverstärkung und Lüftspaltvergrößerung erlaubt.

Die Weiterbildungen gemäß der Ansprüche 4 bis 8 betreffen die Anordnung und Anlenkung der Anlenkpunkte am Koppelhebel. Dabei wird gemäß Anspruch 4 und 5 der Hebelarm, über den die Stellkraft eingeleitet wird, unabhängig vom Anlenkpunkt, an dem die Schubstange wirkt, angeordnet und insbesondere nach Anspruch 5 verlängert. Der Querfortsatz gemäß Anspruch 6 erlaubt eine vorteilhafte Ausrichtung der über die Scubstange auf den einen Bremshebel übertragenen Druckkraft. Das Zusammenlegen des zweiten und dritten Anlenkpunkts gemäß Anspruch 7 ermöglicht eine Verringerung der bewegten Teile und ermöglicht einen vereinfachten Koppelhebel. Die Anordnung eines vierten Anlenkpunkts, an dem ein Hubgerät zum Lösen der Bremse ansetzt, ermöglicht durch die zus. Hebelwirkung eine verringerte Hubkraft sowie eine - quer zur Trommelachse gesehen - schmale Bauweise der Bremse.

Über die Längeneinstellung der Schubstange nach Anspruche 9 und 10 kann der Lüftspalt genau angepaßt werden und entsprechend der Abnutzung nachgestellt werden. Dabei geschieht diese Nachstellung gemäß der Ausbildung nach Anspruch 10 automatisch beim Betrieb der Bremse.

Anspruch 11 betrifft ein Hebelsystem für eine Bremse mit scheiben- oder trommelförmigem Bremskörper und Anspruch 12 betrifft ein Hebelsystem zur Umrüstung herkömmlicher Bremsen, wobei nur über den Austausch des Winkelhebels und der Zugstange gegen den Koppelhebel und die Schubstange eine Bremskrafterhöhung und eine Vergrößerung des möglichen Lüftspalts an einer vorhandenen Bremse ermöglicht wird.

Anspruch 13 betrifft Trommel- oder Scheibenbremsen, die mit dem erfindungsgemäßen Hebelsystem versehen sind.

Die Ausführungsbeispiele werden nachfolgend anhand der Begleitzeichnungen beschrieben, in denen
- Fig. 1: eine Seitenansicht einer erfindungsgemäßen Trommelbremse mit Bremsfeder und Lüftgerät zeigt.
- Fig. 2: eine alternative Ausführung des Koppelhebels und der Schubstange zeigt, bei der der Anlenkpunkt der Bremsfeder und der Schubstange zusammenfallen.
- Fig. 3: eine Ansicht einer längenverstellbaren Schubstange zeigt, der den Koppelhebel mit einem Bremshebel verbindet.
- Fig. 4: eine Seitenansicht einer dem bisherigen Stand der Technik entsprechenden Trommelbremse zeigt.

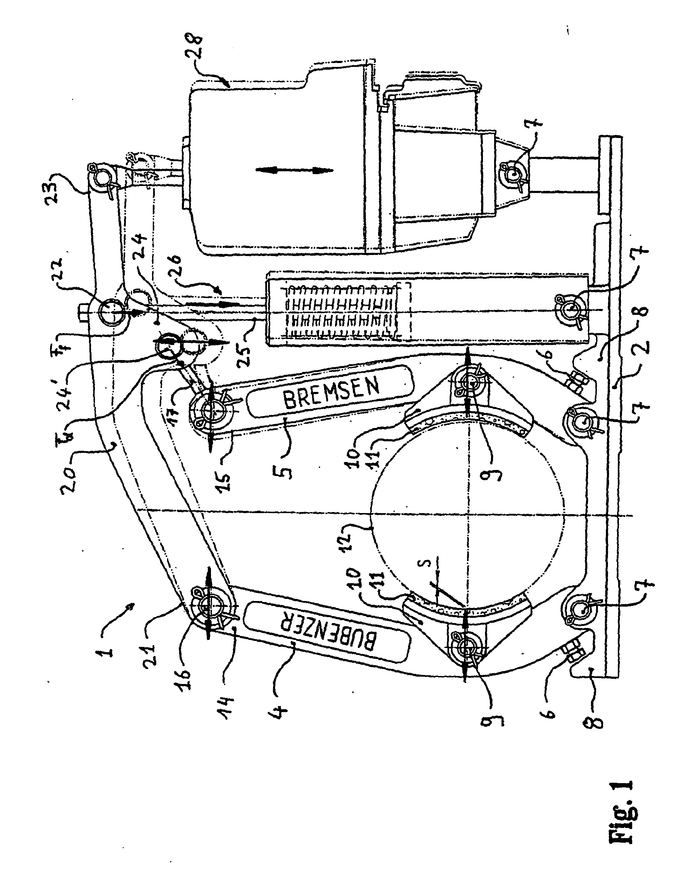

Fig. 1 zeigt eine Trommelbremse 1, bei der auf einer Grundplatte 2 zwei im wesentlichen senkrecht zu dieser verlaufende Bremshebel 4, 5 angeordnet sind, die an ihren unteren Enden über Haltebolzen 7 mit der Grundplatte 2 gelenkig verbunden sind. In einem mittleren Bereich tragen die Bremshebel 4, 5 jeweils eine Bremsbacke 10 mit einem Bremsbelag 11. Der Bremsbelag 11 ist direkt oder über einen Zwischenträger (nicht dargestellt) mit der Bremsbacke 10 verbunden. Die Bremsbacken 10 sind dabei jeweils mit Verbindungsbolzen 9 gelenkig an den Bremshebeln 4, 5 aufgehängt und einander gegenüberliegend angeordnet und umfassen einen Teil des Umfangs einer Bremstrommel 12, deren Außenumfang durch eine strichpunktierte Linie angedeutet ist. Die Bremstrommel 12 ist drehfest z.B. mit einer Welle verbunden, die die Bremskraft auf die entsprechenden abzubremsenden Massen überträgt.

Das Ende 14 des Bremshebels 4 ist gelenkig über einen Bolzen 16 mit dem einen Ende 21 eines Koppelhebels 20 verbunden, der hier das Ende 15 des Bremshebels 5 mit einer Kröpfung übergreift, in seinem weiteren Verlauf im Anlenkpunkt 22 über eine Zugstange 25 an eine Bremsfederanordnung 26 gekoppelt ist, und am anderen Ende 23, ebenfalls gelenkig, an ein Lüftgerät 28 gekoppelt ist. Zwischen dem Ende 21 und dem Anlenkpunkt 22 weist der Koppelhebel einen Querfortsatz 24 auf, der vom Bremshebel 5 in Richtung Bodenplatte 2 absteht und einen weiteren Anlenkpunkt 24' aufweist, der wiederum über eine Schubstange 17 gelenkig mit dem Ende 15 des Bremshebels 5 gekoppelt ist. Die Bremsfederanordnung 26 und das Lüftgerät 28 sind ebenfalls über Verbindungsbolzen 7 gelenkig mit der Grundplatte 2 verbunden.

In gelöster Stellung, d.h. bei ausgefahrenem Lüftgerät (durchgezogene Linien in der Zeichnung) besteht zwischen der Bremstrommel 12 und den Bremsbelägen 11 ein Spalt S, so daß sich die Bremstrommel frei bewegen kann. Zur Zentrierung der Bremshebel 4 und 5 sind an deren unteren Enden im Bereich der Grundplatte 2 über Schrauben justierbare Anschlagelemente 6 vorgesehen, die an entsprechenden Vorsprüngen 8 der Verbindungsplatte 2 angreifen. Die Anschlagelemente 6 stellen sicher, daß die Bremsbeläge 11 bei geöffneter Bremse nicht an der Bremstrommel 12 schleifen.

Zum Bremsen wird das Lüftgerät 28 deaktiviert. Damit wirkt die über die Bremsfederanordnung aufgebrachte Stellkraft F_{f} im Anlenkpunkt 22 am Koppelhebel 20. Dadurch wird der Koppelhebel 20 in Richtung der Kraft F_{f} um den Bolzen 16 am Ende 14 des einen Bremshebels 4 geschwenkt und greift dadurch mit einer in Richtung der Schubstange 17 verlaufenden Kraft F_{d} über diese am Ende 15 des anderen Bremshebels 5 an und drückt beide Bremshebel 4, 5 durch die am Ende 14 des Bremshebels 4 wirkende Gegenkraft zusammen. Die Bremsbeläge 11 an den Bremsbacken 10 greifen an der Bremstrommel 12 an und bauen dort eine entsprechende Reibkraft auf, die zum Bremsen bzw. zum Halten der mit der Bremstrommel gekoppelten Welle führt. Die Bremsstellung der Trommelbremse 1 ist durch die strichpunktierten Linien angedeutet.

Im Verlauf des Bremsvorgangs wächst die, die Bremshebel 4 und 5 zusammenführende Kraftkomponente F_{d} an, und zwar dadurch, daß sich der Winkel der Schubstange 17 zum Bremshebel 5 verändert. Dieser Kniehebeleffekt führt zur Kraftverstärkung, die bei entsprechender Dimensionierung der Bauteile das 1,5-3-fache von herkömmlichen Bremsen mit gleich dimensionierten Bremshebeln 4, 5 gleicher Bremsfederanordnung 26 und gleichem Lüftgerät 28 aufgebracht wird. In geöffneter Stellung beträgt der Winkel zwischen der entlang der Schubstange 17 aufgebrachten Kraft F_{f} zu einer durch die Grundplatte 2 definierten Ebene bzw. zur dazu etwa parallel verlaufenden auf den Bremskörper wirkenden Bremskraft ca. 30 bis 35°, im geschlossenen Zustand (Bremsstellung) ca. 0 bis 15° bzw. 5 bis 15°.

Beim Lösen der Bremse führt der beschriebene Kniehebeleffekt, der über die Schubstange 17 erreicht wird, dazu, daß bei gleichem Stellweg des Anlenkpunkts 22 der Luftspalt S zwischen Bremsbelägen 11 und Bremstrommel 12 im Vergleich zu einer baugleichen Normbremse verdoppelt werden kann. Da der Luftspalt bei zunehmender Abnutzung der Bremsbeläge 11 anwächst, ist bei der oben beschriebenen Bremse 1 ein größerer Luftspalt S tolerierbar und dadurch sind längere Wartungsintervalle möglich. Gleichzeitig wird die sog. Einfallzeit der Bremse, d.h. der Zeitraum vom Deaktivieren des Lüftgerätes bis zum Eintreten der maximalen Bremskraft an der Bremstrommel 12 auch bei abgenutzen Belägen nur unwesentlich verlängert. Ebenso kann der Luftspalt so groß gewählt werden, daß auch eine erhebliche Erwärmung der Bremstrommel 12 bei Dauerbetrieb der Bremse nicht dazu führt, daß die damit einhergehende Umfangszunahme an der Bremstrommel 12 die Bremse bei zu hoher Temperatur an den Bremsbelägen 11 schleifen läßt oder sogar eine Überhitzungsblockade verursacht.

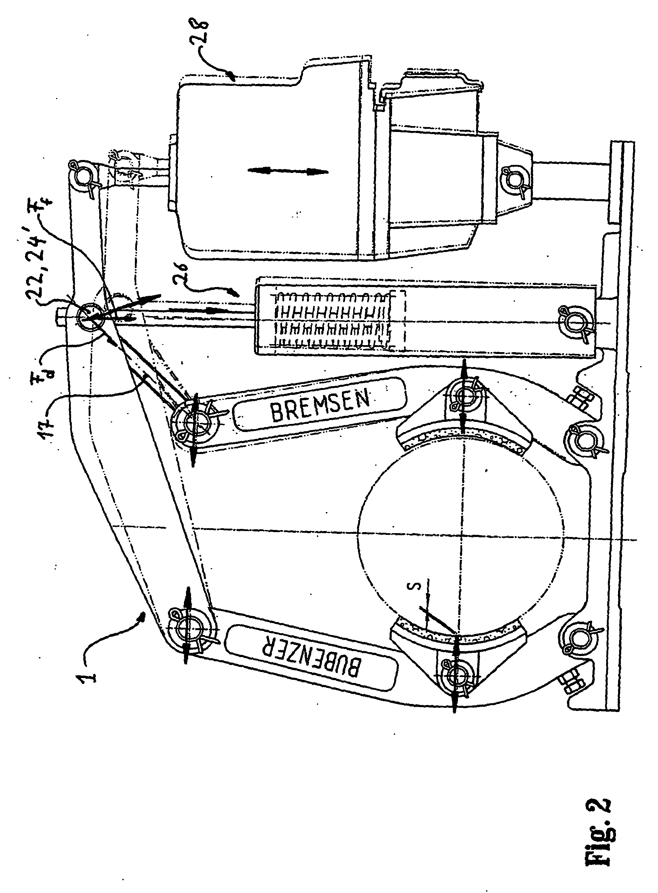

Zur Vereinfachung des Koppelhebels gibt es Ausführungen, bei denen die Anlenkpunkte 22 und 24' vereinigt sind (Fig. 2). Es gibt auch Ausführungen bei denen die Anlenkpunkte 22 und 23 zusammengelegt sind und/oder bei denen die nach Fig. 1 getrennt voneinander ausgeführten Bremsfederanordnung 26 und Lüftgerät 28 durch eine integrierte Einheit ersetzt wird, welche die Bremskraft aufbringt und die Bremse löst. Mit einer solchen Vorrichtung kann die Bremskraft beispielsweise auch geregelt aufgebracht werden. Das hier am Beispiel einer Trommelbremsanordnung beschriebene Wirkprinzip gilt entsprechend für eine Scheibenbremsanordnung (nicht dargestellt) .

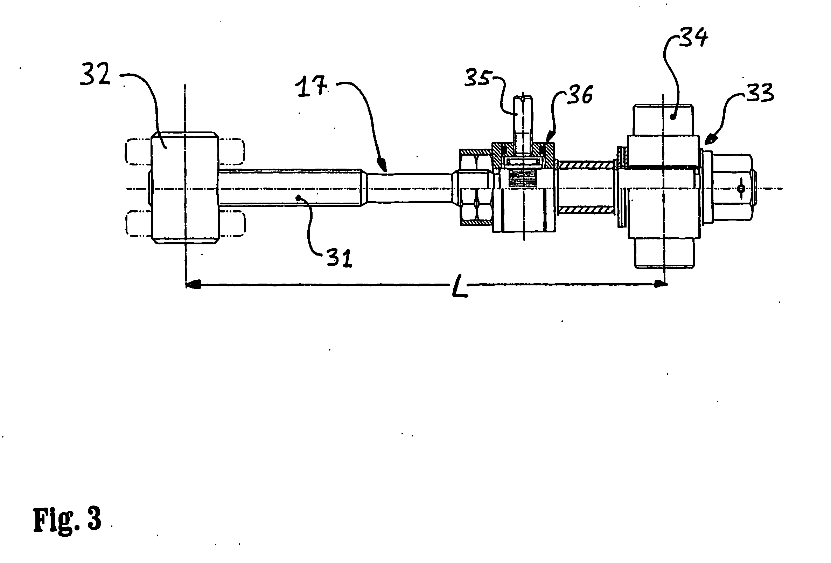

Fig. 3 zeigt eine längeneinstellbare Schubstange 17, an deren einem Ende ein Gewindeabschnitt 31 ausgebildet ist, der in eine entsprechende Gewindebohrung an einem Bolzen 32 eingreift. Auf dem anderen Ende 33 sitzt verdrehbar ein Bolzen 34 mit einer diesen durchsetzenden Bohrung, und auf einem mittleren Abschnitt sitzt eine Freilaufratsche 36, die über einen abstehenden Gewindestift 35 betätigt werden kann. Die Freilaufratsche 36 ist so auf der Stange 17 angebracht, daß sie in einer Richtung frei drehbar ist, und daß sie bei Drehung in der anderen Richtung den Gewindeabschnitt 31 im Bolzen 32 dreht, so daß die Wirklänge L der Druckstange 17 verlängert wird. So kann der Luftspalt S bei der Montage genau eingestellt werden und ohne weitere Wartungsintervalle der Abnutzung der Bremsbeläge 11 entsprechend nachgestellt werden. Die Nachstellung erfolgt automatisch, wenn der Gewindestift 35 durch geeignete an der Bremse entsprechend angeordnete Anschläge (nicht dargestellt) bei den Bremsvorgängen so betätigt wird, daß er den Gewindeabschnitt 31 entsprechend der Abnutzung der Bremsbeläge 11 aus dem Bolzen 32 herausschraubt, die Wirklänge L entsprechend verlängert und dadurch die Bremsbelagabnutzung kompensiert. Je nach Einbaulage werden die Bolzen 32,34 jeweils im Ende 15 des Bremshebels 5 und im Anlenkpunkt 24' (bzw. umgekehrt) schwenkbar aufgenommen. Es gibt auch Ausführungen, bei denen die Luftspaltverstellung in regelmäßigen Intervallen mit der Hand vorgenommen wird.

Das oben beschriebene Hebelsystem kann auch so ausgeführt werden, daß die vorteilhaften Wirkungen auch bei bereits installierten herkömmlichen Bremsen realisiert werden kann. Dazu muß nur ein entsprechend gestalteter Koppelhebel 20 mit einer Schubstange 17 gegen den im einleitenden Teil beschriebenen Winkelhebel und die zugehörige Zugstange ersetzt werden. Die Koppelhebel 20 und Schubstange 17 können dabei so gestaltet werden, daß vorhandene Bremshebel, Bremsfederanordnungen und Lüftgeräte weiterverwendet werden können oder auch so, daß diese Komponenten leichter und damit auch kostengünstiger ausgeführt werden können.

Weitere Anpassungen und Variationen ergeben sich für den Fachmann, ohne den Rahmen der nachfolgenden Ansprüche zu verlassen.

## Patentansprüche

1. Hebelsystem für eine Doppelbackenbremse (1) mit:
einen Bremskörper (12) umgreifenden Bremshebeln (4, 5), die jeweils über eine Bremsbacke (10) am Bremskörper (12) angreifen,
einem Koppelhebel (20) mit mehreren Anlenkpunkten (16, 22, 23, 24'), der zum Bremsen eine auf den Koppelhebel ausgeübte Kraft (F_{f}) über zwei Anlenkpunkte so auf die Bremshebel (4, 5) überträgt, daß diese in einer BremsStellung über die Bremsbacken auf den Bremskörper eine Bremskraft ausüben, **dadurch gekennzeichnet, daß** die Bremskraft über eine mit dem Koppelhebel (20) und einem Bremshebel (5) jeweils gelenkig gekoppelte Schubstange (17) übertragen wird.

2. Hebelsystem nach Anspruch 1, wobei der Koppelhebel (20) im wesentlichen quer zu den Bremshebeln (4, 5) verläuft, und diese übergreift.

3. Hebelsystem nach einem der vorhergehenden Ansprüche, wobei ein erster Anlenkpunkt (16) des Koppelhebels (20) mit einem ersten Bremshebel (4) gekoppelt ist, und ein zweiter Anlenkpunkt (24') so auf dem Koppelhebel angeordnet ist, daß die dort im zweiten Anlenkpunkt (24') angreifende Schubstange (17) in Bremsstellung einen Winkel von 0° bis 15° zur auf den Bremskörper wirkenden Bremskraft bildet.

4. Hebelsystem nach Anspruch 1, wobei die Kraft (F_{f}) an einem dritten Anlenkpunkt (22) am Koppelhebel (20) über eine Bremseinrichtung (26) aufgebracht wird.

5. Hebelsystem nach Anspruch 4, wobei, der zweite Anlenkpunkt (24') zwischen dem ersten und dritten Anlenkpunkt (16, 22) angeordnet ist.

6. Hebelsystem nach einem der vorhergehenden Ansprüche, wobei der Koppelhebel (20) einen den zweiten Anlenkpunkt (24') aufnehmenden Querfortsatz (24) aufweist.

7. Hebelsystem nach einem der Ansprüche 4 bis 6, wobei der zweite und dritte Anlenkpunkt (22, 24') am Koppelhebel zusammenfallen.

8. Hebelsystem nach einem der vorhergehenden Ansprüche, wobei an einem vierten Anlenkpunkt ein Hubgerät zum Lösen (Lüften) der Bremse ansetzt.

9. Hebelsystem nach einem der vorhergehenden Ansprüche, wobei die Länge der Schubstange (17) einstellbar ist.

10. Hebelsystem nach Anspruch 9, wobei die Längeneinstellung der Schubstange (17) entsprechend der Abnutzung des Bremsbelags im Betrieb automatisch mittels einer Nachstellvorrichtung (17) erfolgt, insbesondere mittels einer Freilaufnachstellung.

11. Hebelsystem nach einem der vorhergehenden Ansprüche, wobei der Bremskörper (12) scheiben- oder trommelförmig ausgebildet ist.

12. Hebelsystem zur Umrüstung einer Normbremse, mindestens aufweisend einen Koppelhebel (20) und eine Schubstange (17) gemäß einem der Ansprüche 1 bis 10.

13. Trommel- oder Scheibenbremse, die ein Hebelsystem nach einem der vorhergehenden Ansprüche aufweist.

## Claims

1. Lever mechanism system for a double jaw brake (1) with:
brake levers (4, 5) encompassing a brake body (12), which respectively bite on the brake body (12) via a brake jaw (10),
a coupling lever (20) with several articulation points (16, 22, 23, 24'), which in order to effect braking, transmits to the brake levers (4, 5) via two articulation points a force (F_{f}) that is exerted on the coupling lever, in such a way that in a braking position, these [brake levers] exert a braking force on the brake body via the brake jaws,
**characterised in that** the braking force is transferred via a connecting rod (17) that is coupled in a pivoted manner respectively with the coupling lever (20) and a brake lever (5).

2. Lever mechanism system according to claim 1, wherein the coupling lever (20) runs essentially transverse to the brake levers (4, 5), and overlaps them.

3. Lever mechanism system according to one of the preceding claims, wherein a first articulation point (16) of the coupling lever (20) is coupled to a first brake lever (4), and a second articulation point (24') is arranged on the coupling lever in such a way that in the braking position, the connecting rod (17) that engages there in the second articulation point (24') forms an angle of 0° to 15° to the braking force acting on the brake body.

4. Lever mechanism system according to claim 1, wherein the force (F_{f}) is applied to a third articulation point (22) on the coupling lever (20), via a braking device (26).

5. Lever mechanism system according to claim 4, wherein the second articulation point (24') is arranged between the first and third articulation points (16, 22).

6. Lever mechanism system according to one of the preceding claims, wherein the coupling lever (20) has a transverse projection (24) that accommodates the second articulation point (24').

7. Lever mechanism system according to one of the claims 4 to 6, wherein the second and third articulation points (22, 24') coincide on the coupling lever.

8. Lever mechanism system according to one of the preceding claims, wherein a lifting appliance for releasing (venting) the brake comes into effect on a fourth articulation point.

9. Lever mechanism system according to one of the preceding claims, wherein the length of the connecting rod (17) can be adjusted.

10. Lever mechanism system according to claim 9, wherein the length adjustment of the connecting rod (17) takes place automatically according to the wear on the brake lining during operation, by means of a readjusting device (17), in particular by means of a free-running readjustment element.

11. Lever mechanism system according to one of the preceding claims, wherein the brake body (12) is designed to be in the form of a disk or drum.

12. Lever mechanism system for converting a standard brake, at least having one coupling lever (20) and a connecting rod (17) according to one of the claims 1 to 10.

13. Drum brake or disk brake that has a lever mechanism system according to one of the preceding claims.

## Revendications

1. Système à levier pour un frein à double mâchoire (1) comprenant :
- des leviers de frein (4, 5) enserrant un corps de frein (12), leviers de frein qui s'appliquent respectivement, par une mâchoire de frein (10), sur le corps de frein (12),
- un levier de couplage (20) comprenant plusieurs points articulés (16, 22, 23, 24'), levier de couplage qui, pour le freinage, transmet aux leviers de frein (4, 5), via deux points articulés, une force (F_{f}) exercée sur le levier de couplage, de manière telle que ces leviers de frein, dans une position de freinage, exercent une force de freinage sur le corps de frein, par les mâchoires de frein,
**caractérisé en ce que** la force de freinage est transmise par une bielle de poussée (17) couplée, de manière articulée, respectivement au levier de couplage (20) et à un levier de frein (5) .

2. Système à levier selon la revendication 1, où le levier de couplage (20) s'étend pratiquement de façon transversale par rapport aux leviers de frein (4, 5) et les enserre.

3. Système à levier selon l'une ou l'autre des revendications précédentes, où un premier point articulé (16) du levier de couplage (20) est couplé à un premier levier de frein (4), et un deuxième point articulé (24') est disposé sur le levier de couplage, de manière telle que la bielle de poussée (17) s'appliquant à cet endroit, dans le deuxième point articulé (24'), forme, en position de freinage, un angle compris entre 0° et 15° pour la force de freinage s'exerçant sur le corps de frein.

4. Système à levier selon la revendication 1, où la force (F_{f}), au niveau d'un troisième point articulé (22), est appliquée sur le levier de couplage (20), via un dispositif de freinage (26).

5. Système à levier selon la revendication 4, où le deuxième point articulé (24') est disposé entre les premier et troisième points articulés (16, 22).

6. Système à levier selon l'une quelconque des revendications précédentes, où le levier de couplage (20) présente un prolongement transversal (24) logeant le deuxième point articulé (24').

7. Système à levier selon l'une quelconque des revendications 4 à 6, où les deuxième et troisième points articulés (22, 24') coïncident au niveau du levier de couplage.

8. Système à levier selon l'une quelconque des revendications précédentes, où un dispositif élévateur servant à desserrer (ventiler) le frein se fixe au niveau d'un quatrième point articulé.

9. Système à levier selon l'une quelconque des revendications précédentes, où la longueur de la bielle de poussée (17) est réglable.

10. Système à levier selon la revendication 9, où le réglage en longueur de la bielle de poussée (17) est réalisé automatiquement au cours du fonctionnement, au moyen d'un dispositif de rattrapage (17), en particulier au moyen d'un rattrapage à roue libre, de façon correspondant à l'usure de la garniture de frein.

11. Système à levier selon l'une quelconque des revendications précédentes, où le corps de frein (12) est configuré en forme de disque ou de tambour.

12. Système à levier servant à rééquiper un frein normalisé, présentant au moins un levier de couplage (20) et une bielle de poussée (17), selon l'une quelconque des revendications 1 à 10.

13. Frein à tambour ou à disque qui présente un système à levier selon l'une quelconque des revendications précédentes.
